# EUROPEAN PATENT APPLICATION

(11) **EP 4 512 514 A1**
(43) Date of publication of application: **26.02.2025**
(21) Application number: 23192912.6
(22) Date of filing: 23.08.2023
(51) Int. Cl.: B01J 2/06, A23K 50/15

(54) **PROCESS FOR PRODUCING SOLID PARTICLES COMPRISING UREA, BIURET, AND N-CONTAINING COMPOUNDS PRODUCED DURING A UREA CONDENSATION PROCESS**

(71) Applicant: Yara International ASA, 0277 Oslo (NO)
(72) Inventor: VAN BELZEN, Ruud, 4541 HJ Terneuzen (NL); PIRRO, Laura, 4541 HJ Terneuzen (NL)
(74) Representative: De Clercq & Partners

(57) **Abstract**

The present disclosure relates to a process for producing solid particles, particularly flaky solid particles, comprising urea, biuret, and N-containing compounds produced during a urea condensation process, the process comprising the steps of providing a melt of a composition which comprises urea, biuret, and N-containing compounds produced during a urea condensation process, and optionally, one or more nitrate compounds, and forming molten droplets of the melt, introducing the molten droplets in a cooling liquid, thereby forming solid particles, particularly wherein the cooling liquid is maintained at a temperature effective to solidify the melt, and separating the cooling liquid from the solid particles.

## Description

### Technical field

The invention relates to a process for producing solid particles comprising urea, biuret, N-containing compounds produced during a urea condensation process, optionally further comprising one or more nitrate compounds, particularly using a prilling-like method.

### Background

Urea is a chemical substance with the chemical formula CH4N2O. It contains a very high content of nitrogen (N) and is used in a wide range of industries, including fertilizers, and animal feed. Currently, it is known to produce urea particles, such as urea prills, with a high amount of urea. In the commonly known prilling method, a concentrated melt is fed to a perforated rotating bucket, or a shower-type spray head located at the top of a prilling tower, and is then sprayed in the form of droplets which are consequently solidified and cooled during free fall through the tower against a forced or natural up-draft of ambient air.

A new feed composition for ruminants, wherein the feed composition comprises urea, biuret, and other compounds has recently been found. Biuret is a by-product of urea production, and it is usually desired to keep the level of biuret as low as possible in urea-based fertilizer products, usually below 1.2 weight%. However, for feed compositions, a high amount, such as up to 60 weight%, is tolerated, and even sometimes desirable.

There is thus a need in the art for improved processes for producing solid particles from a composition comprising substantial amounts of urea and biuret, N-containing compounds produced during the condensation of urea, and optionally one or more nitrate compounds.

### Summary

The present disclosure generally provides a particulation technique, or stated differently a process for the production of solid particles comprising urea, biuret, N-containing compounds produced during a urea condensation process, and optionally comprising one or more nitrate compounds.

A first aspect of the present disclosure provides a process for producing particles comprising urea, biuret, and N-containing compounds produced during a urea condensation process, wherein the process comprises the steps of (a) providing a melt of a composition, the composition comprising urea, biuret, and N-containing compounds produced during a urea condensation process, and, optionally, one or more nitrate compounds; (b) forming molten droplets of the melt; (c) introducing the molten droplets in a cooling liquid, thereby forming solid particles, in particular wherein the cooling liquid is maintained at a temperature effective to solidify the melt; and (d) separating the cooling liquid from the solid particles, in particular by centrifugation.

A second aspect of the present disclosure provides solid particles, obtained or obtainable by a process according to the present disclosure, comprising:
- between 35 wt.% and 55 wt.% of urea, between 35 wt.% and 50 wt.% of biuret, and between 5.0 wt.% and 30 wt.% of the N-containing compounds; or
- between 20 wt.% and 40 wt.% of urea, between 20 wt.% and 40 wt.% of biuret, between 6 wt.% and 16 wt.% of N-containing compounds, and between 21 wt.% and 37 wt.% of one or more nitrate compounds,
with wt.% based on the total weight of the particle.

In some embodiments, the solid particles are flaky.

In some embodiments, the solid particles have a diameter, or length and/or width between 1.0 and 10 mm, such as between 1.5 and 6 mm or between 2.0 mm and 4.0 mm; and having a thickness between 0.5 to 2.0 mm, such as between 0.8 and 1.5 mm.

A further, related aspect of the present invention, provides for the use of solid particles, in particular flaky solid particles, according to the present disclosure and/or obtained by a process according to the present disclosure, as a non-protein nitrogen source for ruminants.

### Description of the figures

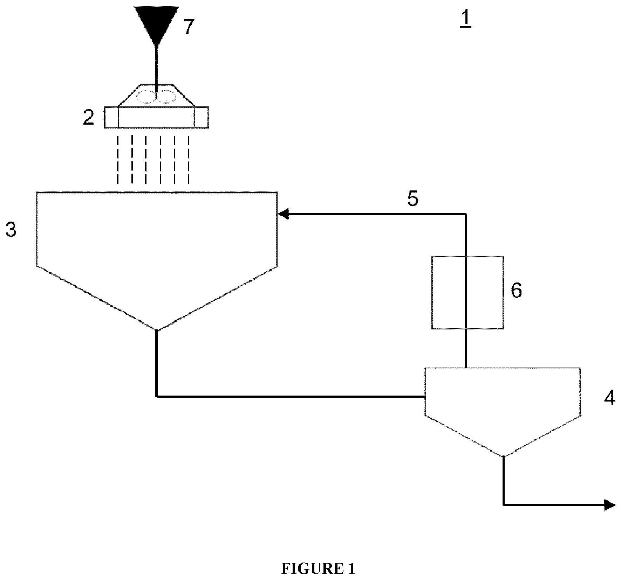

Figure 1 shows a schematic diagram of an example of a particulation device used in an embodiment of a process according to the present disclosure.

### Detailed description

The present inventors have developed a process for producing solid particles, in particular non-sticky flaky particles, of a composition comprising urea, biuret, and N-containing compounds which are produced during the urea condensation process, or in other words, N-containing compounds which are produced during the production process of biuret out of urea. A urea condensation process is a process comprising heating urea. When urea is heated at a temperature above 132 °C, urea is converted into biuret, and, in addition, so-called "by-products" in the form of N-containing compounds are formed. The main N-containing compounds that are formed during the condensation process of urea are ammelide, cyanuric acid and triuret. Surprisingly, it was found that solid particles, in particular flaky particles, could be produced from a melt of such composition by introducing molten droplets of the composition into a cooling liquid. In particular, the inventors have found that by spraying or dropping molten droplets of a composition as further described herein in a cooling liquid, particularly from a distance relatively close to the surface of the cooling liquid, the molten droplets are cooled and solidify as solid particles.

"A", "an", and "the" as used herein refers to both singular and plural referents unless the context clearly dictates otherwise. By way of example, "a compartment" refers to one or more than one compartment.

In some embodiments, the solid particles have a shape that can be referred to as "flaky". The term "flaky particles" or "flakes" as used herein refers to particles which have a thin, flattened shape. Said otherwise, flaky particles are particles, wherein its shortest dimension is less than 60% of its mean dimension.

A first aspect of the present disclosure generally provides a process for the production of solid particles, comprising urea, biuret, and N-containing compounds which are produced during the condensation process of urea, and optionally further comprising one or more nitrate compounds comprising the steps of (a) providing a melt of a composition, the composition comprising urea, biuret, and N-containing compounds produced during a urea condensation process, and, optionally, one or more nitrate compounds; (b) forming molten droplets of the melt; (c) introducing the molten droplets in a cooling liquid, thereby forming solid particles, in particular wherein the cooling liquid is maintained at a temperature effective to cool and solidify the molten droplets; and (d) separating the cooling liquid from the solid particles.

Without wishing to be bound by theory, it is believed that the shape of the solidified particles depends on the state of the molten droplets when entering the cooling liquid. When the molten droplets are still in a deformable or liquid state when entering the cooling liquid, the molten droplets are flattened and changed to a flake shape upon impact with the surface of the cooling liquid, and, upon cooling in the cooling liquid, are solidified as a flaky particle. When the molten droplets resist the impact with the surface of the cooling liquid, such as when the molten droplets are already solidified to some extent when introduced in the cooling liquid, more spherical solidified particles are obtained upon further cooling and solidification in the cooling liquid.

In some embodiments, the present disclosure provides a process for the production of solid particles, comprising urea, biuret, and N-containing compounds which are produced during the condensation process of urea, and optionally further comprising one or more nitrate compounds comprising the steps of (a) providing a melt of a composition, the composition comprising urea, biuret, and N-containing compounds produced during a urea condensation process, and, optionally, one or more nitrate compounds; (b) forming molten droplets of the melt; (c) introducing the molten droplets in a cooling liquid and flattening the molten droplets, particularly by the impact of the molten droplets on a surface of the cooling liquid, thereby forming solid particles, particularly wherein the cooling liquid is maintained at a temperature effective to solidify the molten droplets; and (d) separating the cooling liquid from the particles.

In the context of the present disclosure, a "melt" of a compound or composition, such as a "melt of the composition comprising urea, biuret, and the N-containing compounds" refers to a composition in liquid form or in its liquid state, i.e. above its melting temperature, containing at least 95 wt.% of the compound or composition and less than 5 wt.% water, preferably between 0.1 wt.% and 4.5 wt.%, or between 0.1 wt.% and 2.0 wt.% water.

A melt comprising urea, biuret, and N-containing compounds, provided in step a) only solidifies slowly and exhibits a rather broad phase transition range instead of a well-defined solidification temperature, making the development of a particulation technology challenging. In addition, such a melt also displays an important supercooling effect, meaning that the melt can reach a temperature below its solidification temperature while staying in liquid phase.

A melt (liquid feed) can be dosed to a spraying head, such as via a pressurized vessel or via a suitable pumping means to form molten droplets, i.e., to form individual droplets of the melt according to the present disclosure. The temperature of the melt (T_{feed}) in the dosing vessel can be maintained via a controlled heating system as known to the skilled person, for instance comprising a heating bath and a mantle, heating coils, or any other known alternatives. In some embodiments, the temperature of the melt or molten droplets is between 100 °C and 180 °C, more in particular between 120 °C and 170 °C or between 130 °C and 150 °C.

In some embodiments, the melt provided in step a) has a temperature of between 140 °C and 170 °C. The melt provided in step a) should have a temperature that ensures that it does not solidify before or in the device creating the molten droplets. However, if the temperature is too high, it might take longer for the droplets to solidify.

In some embodiments, during step (c), the molten droplets flatten upon impact of the molten droplets on a surface of the cooling liquid, thereby forming flaky solid particles, particularly wherein the flaky solid particles have a diameter, or length and/or width between 1.0 and 10 mm, such as between 1.5 and 6 mm or between 2.0 mm and 4.0 mm; and a thickness between 0.5 to 2.0 mm, such as between 0.8 and 1.5 mm.

In some embodiments, the cooling liquid is an aqueous solution. In some embodiments, the cooling liquid is an aqueous urea solution. In some embodiments, the cooling liquid is an aqueous urea solution, with a temperature of from -10 °C to 50 °C, from -5 °C to 30°C, from 5 °C to 20 °C, or from 5 °C to 15 °C. In some embodiments, the cooling liquid is a concentrated or saturated aqueous urea solution having a concentration of at least 25 wt.% or at least 30 wt.% urea. The main purpose of the cooling liquid is to accelerate the cooling of the molten droplets. however, it was observed that if the temperature of the cooling liquid was below 5 °C, the quality of some solid particles formed by the method was lower than particles made with a cooling liquid at a temperature of from 5 to 15 °C. Without being bound by theory, it is thought that if the difference of temperature between the molten droplets and the cooling liquid is too important, some parts of the droplets solidify too fast compared with the rest of the droplets, leading to poorer quality. It seems that a compromise should be reached between the cooling rate and the quality of the particles. Advantageously, the use of a concentrated or saturated aqueous urea solution as cooling liquid prevents or limits the dissolution of the composition according to the present disclosure, in particular the urea comprised in the composition, in the cooling liquid. When the molten droplets enter the cooling liquid, the cooling liquid is locally heated. Although the solubility of the composition according to the present disclosure, in particular the urea comprised in the composition, in water increases with increasing temperature, dissolution is limited due to the concentrated and/or saturated nature of the aqueous urea solution. Also, as the composition according to the present disclosure comprises urea, the use of a concentrated or saturated aqueous urea solution as cooling liquid does not introduce additional or foreign components in the solidified particles.

In some embodiments, the cooling liquid comprises one or more surfactants. In some embodiments, the cooling liquid comprises from 0.01 to 1.0 weight% of one or more surfactants. In some embodiments, the cooling liquid comprises from 0.01 to 1.0 weight% of a surfactant. Surfactants are chemical compounds that can decrease the surface tension of liquids, in particular between the liquid comprising a surfactant and another liquid, a gas or a solid. It was observed in some cases of the present method that the presence of surfactant could have a beneficial impact on the method. In particular, it was observed that the addition of a surfactant to the cooling liquid, or the addition of a composition comprising a surfactant, such as soap, to the cooling liquid, could narrow the particle size distribution of the particles produced by the present method. In some experiments, the addition of a soap product to an aqueous saturated urea solution at a temperature of 12 °C led to the formation of particles with a very narrow particle size and shape distribution. This effect was also observed in the same cooling liquid was stirred while the droplets were introduced into the cooling liquid. In some embodiments, the surfactant is a non-ionic surfactant or an anionic surfactant. In some embodiments, the cooling liquid comprises a non-ionic surfactant and an anionic surfactant.

In some embodiments, step (b) comprises providing the melt to a spraying head and spraying the melt through the spraying head to form the molten droplets of the melt.

In some embodiments, step (b) comprises providing the melt to a prilling bucket comprising through-holes and spraying the melt through the through-holes of the prilling bucket to form the molten droplets of the melt.

In some embodiments, step (b) comprises directing the melt to a spraying nozzle, for example an atomization nozzle, and spraying the melt through the spraying nozzle to form the molten droplets of the melt.

In some embodiments, the melt provided in step a) comprises between 5 wt.% and 60 wt.% of urea and between 2 wt.% and 60 wt.% of biuret, in particular between 25 wt.% and 55 wt.% of urea, between 25 wt.% and 50 wt.% of biuret, and between 5 wt.% and 30 wt.% of the N-containing compounds, based on the total weight of the composition.

In some embodiments, the composition comprises between 20 wt.% and 40 wt.% of urea, between 20 wt.% and 40 wt.% of biuret, between 4.0 wt.% and 20 wt.% of the N-containing compounds, and between 21 wt.% and 37 wt.% of one or more nitrate compounds, more in particular between 25 wt.% and 35 wt.% of urea, between 25 wt.% and 35 wt.% of biuret, between 4.0 wt.% and 15 wt.% of the N-containing compounds, and between 23.5 wt.% and 31.5 wt.% of one or more nitrate compounds, based on the total weight of the composition.

In some embodiments, the N-containing compounds are selected from the group consisting of ammelide, cyanuric acid, triuret, and mixtures thereof. Ammelide is the compound with the chemical formula: C₃H₄N₄O₂, and CAS number: 645-93-2, cyanuric acid is the compound with the chemical formula: C₃H₃N₃O₃, and CAS number: 108-80-5; and triuret is the compound with the chemical formula: C₃H₆N₄O₃, and CAS number: 556-99-0.

In some embodiments, prior to step (a), a melt of the composition comprising urea, biuret, and N-containing compounds produced during a urea condensation process is produced by subjecting a urea melt in one or more reactor vessels, each having a headspace at a top part thereof and a bottom part, to a heating process, such that the temperature of the melt is from 140 °C to 180 °C, for example from 145 °C to 150 °C, wherein during the heating process the urea melt is converted to the melt of the composition comprising urea, biuret, and N-containing compounds, which is removed from the one or more reactor vessels via the bottom part thereof. In some embodiments, during the heating process, the melt in the one or more reactor vessels is further subjected to a circulation process in and out of the one or more reactor vessels via a circulation loop arranged externally from each of the reactor vessels; and wherein during formation of the melt comprising urea, biuret, and N-containing compounds, gaseous by-products are produced which are evacuated out of the respective reactor vessel via the top part thereof.

In some embodiments, the molten droplets, i.e., drops of the melt, of the composition according to the present disclosure may be formed by spraying or dispensing the melt from a vessel or device having a perforated bottom or nozzles, such as a spraying head or prilling head. In some embodiments, the perforated bottom or nozzles comprise one or more orifices, particularly with a diameter between 0.5 and 4 mm, such as between 1.0 and 3.0 mm. In some embodiments, the molten droplets sprayed or dispensed from the vessel or device having a perforated bottom or nozzles maintain their liquid state in their trajectory between the vessel or device having a perforated bottom or nozzles and the cooling liquid.

The cooling liquid is maintained at a temperature effective to solidify and cool the molten droplets. In some embodiments, the cooling liquid is maintained at a temperature of at least 5 °C, at least 10 °C, at least 20 °C, at least 30 °C, at least 40 °C, or at least 50 °C below the melting temperature of the composition. In some embodiments, the cooling liquid has a temperature of between -10 °C and 50 °C, such as between -10 °C and 40 °C, between -5 °C and 30 °C or between -5 °C and 20 °C or between -5 °C and 10 °C. Cooling means to maintain the temperature of the cooling liquid are known to the skilled person.

The composition of the cooling liquid according to the present disclosure is not particularly limited. The cooling liquid may be an inert liquid, which does not react with and/or which does not dissolve the composition according to the present disclosure, such as an oil, for instance a vegetable oil.

In some embodiments, the cooling liquid is a concentrated or saturated aqueous urea solution comprising at least 15 wt.%, at least 30 wt.% or at least 40 wt.% of urea, with a temperature of between -10 °C and 50 °C, such as between -10 °C and 40 °C, between -5 °C and 30 °C or between -5 °C and 20 °C, between -5 °C and 10 °C or between -5 °C and 5 °C. For example, a saturated aqueous urea solution at 7 °C has a urea concentration of 44 weight%. The fact that the composition of the solid particles may contain less urea due to losses in the cooling liquid means that the biuret content in the melt can be lower than the expected biuret content in the final solid particles. This means that the condensation urea process may be run at a lower temperature and/or for a shorter period of time, and still obtain the same biuret content in the final solid particles.

In some embodiments, the cooling liquid is static. In some embodiments, the cooling liquid is being kept in movement, for example with a mixing device or stirring device. Movement of the cooling liquid can also be induced by the introduction of a gas into the liquid. Keeping the cooling liquid in movement may improvement the cooling of the particles as the temperature of the cooling liquid is almost constant throughout the liquid at any time. Small local variations of temperature, for example less than 2 °C, may occur. However, it was also observed that stirring the cooling liquid modified the shape and structure of the solid particles. A liquid in movement applies shear forces to the droplets which modifies the shape and/or the strength of the final particles.

In step (d), the solid particles, in particular flaky particles, are separated from the cooling liquid, and, optionally, the solid particles, in particular flaky particles are dried. Suitable solid/liquid separation means are known to the skilled person. In some embodiments, the solid particles, in particular the solid flaky particles, are separated from the cooling liquid by centrifugation.

In some embodiments, the present method is performed in the absence of any additional additives to the melt. It is thought that the biuret and the N-containing compounds produced in a urea condensation process provide the necessary properties to the composition to obtain solid particles without requiring the addition of other solidification additives.

The process according to the present disclosure may be performed by a suitable particulation device, such as a prilling-like particulation device.

The melt provided in step a) may comprise between 5 wt.% and 60 wt.% of urea, between 2 wt.% and 60 wt.% of biuret, between 5 wt.% and 30 wt.% ofN-containing compounds produced during a urea condensation process, and optionally between 0.1 wt.% and 50 wt.% of one or more nitrate compounds, with wt.% based on the total weight of the composition. In some embodiments, the composition comprises between 20 wt.% and 55 wt.% urea, between 20 wt.% and 50 wt.% urea, between 6 wt.% and 20 wt.% of the N-containing compounds, and, optionally, between 0.5 wt.% and 40 wt.% of one or more nitrate compounds, with wt.% based on the total weight of the composition, the total weight of the composition forming 100 wt.%. The one or more nitrates contribute to the nutritional value of the composition and may facilitate and promote the solidification of the composition. In particular, the one or more nitrate compounds are water-soluble nitrate salts. In some embodiments, the one or more water-soluble nitrate salts are selected from the group consisting of calcium nitrate (Ca(NO₃)₂), magnesium nitrate (Mg(NO₃)₂), ammonium nitrate (NH₄NO₃), potassium nitrate (KNOs), sodium nitrate (NaNO₃), and mixtures thereof. In some embodiments, the N-containing compounds produced during a urea condensation process comprise (i) between 2.5 wt.% and 15 wt.%, more in particular between 3 wt.% and 10 wt.%, even more in particular between 3 wt.% and 8 wt.% or between 5 wt.% and 8 wt.% of cyanuric acid; (ii) between 2.5 wt.% and 8 wt.%, more in particular between 3 wt.% and 6 wt.% of triuret; and (iii) between 0.1 wt.% and 5 wt.%, more in particular between 0.5 wt.% and 3.0 wt.% of ammelide. In some embodiments, the N-containing compounds produced during a urea condensation process comprise between 2.5 wt.% and 15 wt.%, in particular between 3 wt.% and 10 wt.%, even more in particular between 3 wt.% and 8 wt.% or between 5 wt.% and 8 wt.% of cyanuric acid. In some embodiments, the N-containing compounds produced during a urea condensation process comprise between 2.5 wt.% and 8 wt.%, more in particular between 3 wt.% and 6 wt.% of triuret. In some embodiments, the N-containing compounds produced during a urea condensation process comprise between 0.1 wt.% and 5 wt.%, more in particular between 0.5 wt.% and 3.0 wt.% of ammelide. The composition may also further comprise between 0.1 wt.% to 4.5 wt.% of water, in particular between 0.1 wt.% and 2.0 wt.% of water.

When no nitrate compound(s) is (are) present in the composition, the composition, hereafter referred to and abbreviated with "UB", may comprise between 30 wt.% and 60 wt.% of urea and between 30 wt.% and 60 wt.% of biuret, more in particular between 35 wt.% and 55 wt.% of urea and between 35 wt.% and 50 wt.% of biuret, based on the total weight of the composition, the total weight% of the composition being 100 wt.%. The UB composition may further comprise between 5.0 wt.% and 30 wt.%, in particular between 5.0 wt.% and 20 wt.% or between 6.0 wt.% and 16 wt.%, of the N-containing compounds produced during a urea condensation process. In some embodiments, the UB composition comprises, as N-containing compounds, (i) between 2.5 wt.% and 15 wt.%, more in particular between 3 wt.% and 10 wt.% or between 5 wt.% and 8 wt.% of cyanuric acid; (ii) between 0.1 wt.% and 5 wt.%, more in particular between 0.5 wt.% and 3.0 wt.% or between 0.8 wt.% and 2.0 wt.% of ammelide; and/or (iii) between 2.5 wt.% and 8 wt.%, more in particular between 3 wt.% and 6 wt.% of triuret. In some embodiments, the UB composition comprises between 2.5 wt.% and 15 wt.%, more in particular between 3 wt.% and 10 wt.% or between 5 wt.% and 8 wt.% of cyanuric acid. In some embodiments, the UB composition comprises between 0.1 wt.% and 5 wt.%, more in particular between 0.5 wt.% and 3.0 wt.% or between 0.8 wt.% and 2.0 wt.% of ammelide. In some embodiments, the UB composition comprises between 2.5 wt.% and 8 wt.%, more in particular between 3 wt.% and 6 wt.% of triuret.

In some embodiments, when one or more nitrate compounds are present in the composition, particularly in a concentration exceeding 10 wt.%, 15 wt.% or 20 wt.%, the composition, hereafter referred to and abbreviated with "UBN", typically comprise between 20 wt.% and 40 wt.% of urea, between 20 wt.% and 40 wt.% of biuret, and between 20 wt.% and 40 wt.% or between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, even more in particular between 29 wt.% and 33 wt.% of urea; between 29 wt.% and 33 wt.% of biuret, and between 23.5 wt.% and 31.5 wt.% of one or more nitrate compounds, based on the total weight of the composition. In particular, the one or more nitrate compounds are water-soluble nitrate salts, more in particular a water-soluble nitrate salt chosen out of calcium nitrate (Ca(NO₃)₂), magnesium nitrate (Mg(NO₃)₂), ammonium nitrate (NH₄NO₃), potassium nitrate (KNOs), sodium nitrate (NaNO₃), or mixtures thereof. In some embodiments, the UBN composition comprises between 20 wt.% and 32 wt.% of calcium nitrate, more in particular between 22 wt.% and 29 wt.% of calcium nitrate and between 1 wt.% and 5 wt.% of ammonium nitrate or between 22 wt.% and 29 wt.% of calcium nitrate and between 1.5 wt.% and 2.5 wt.% of ammonium nitrate. The UBN composition typically comprises between 6.0 wt.% and 16 wt.% ofN-containing compounds produced during a urea condensation process. In some embodiments, the UBN composition further comprises (i) between 1.0 wt.% and 5.0 wt.% of triuret, more in particular between 1.5 wt.% and 3.0 wt.% of triuret, (ii) between 0.5 wt.% and 3.0 wt.% of ammelide, more in particular between 0.9 wt.% and 1.5 wt.% of ammelide; and/or (iii) between 3.0 wt.% and 15 wt.% of cyanuric acid, more in particular between 3.0 wt.% and 7 wt.% of cyanuric acid. In some embodiments, the UBN composition comprises between 1 wt.% and 5.0 wt.% of triuret, in particular between 1.5 wt.% and 3 wt.% oftriuret. In some embodiments, the UBN composition comprises between 0.5 wt.% and 3.0 wt.% of ammelide, in particular between 0.9 wt.% and 1.5 wt.% of ammelide. In some embodiments, the UBN composition comprises between 3.0 wt.% and 15 wt.% of cyanuric acid, in particular between 3.0 wt.% and 7.0 wt.% of cyanuric acid.

In some embodiments, the method comprises the step of producing the melt provided in step a): first a urea melt is pumped by means of a pump to a single reactor vessel or a series of different reactor vessels where the condensation process of urea will take place. The urea melt provided to the one or more reactor vessels particularly comprises between 95 wt.% and 100 wt.% urea. The urea melt may be formed by melting solid urea particles, such as urea prills. Alternatively, the urea melt may be produced in a urea-producing plant by first reacting ammonia and carbon dioxide to obtain an aqueous solution comprising urea, and further processing this aqueous urea solution to obtain a urea melt. This urea melt is then heated in the one or more reactor vessels using a heating device to a desired process temperature of between 140 °C and 180 °C. Under these conditions, condensation reactions of urea occur and yield biuret, and other N-containing compounds, such as ammelide, triuret and cyanuric acid. In some embodiments, the melt in the one or more reactor vessels is heated to a temperature of between 140 °C and 170 °C, or at a temperature of 145 °C. Each of the reactor vessels has a top part with a headspace and a bottom part. Water present in the melt is evaporated and transported into the air or gas which is present in the headspace of the respective reactor vessel(s).

During the heating process and the formation of the melt comprising urea, biuret, and N-containing compounds, gaseous by-products are produced as well. In some embodiments, ammonia (NH₃) is liberated at temperatures above the melting point of urea, which is around 132 °C. Furthermore, also CO₂ (carbon dioxide) and water vapor may be formed. In order to increase the conversion of urea into biuret and other N-containing compounds, it is preferred to remove these gases from the melt and the reactor vessel. A first possibility is to introduce a carrier gas in the melt present in the one or more reactor vessels which will then strip the gaseous by-products out of the melt. The carrier gas is thus mixed with the gaseous by-products resulting in a gas combination. A second possibility is to introduce a purging gas stream in the headspace of the one or more reactor vessels which will then mix with the gaseous by-products, resulting in a gas combination. It is also possible to perform both options, either simultaneously or alternatingly. Introducing a carrier gas in the melt present in the one or more reactor vessels may be done using a sparger which is designed to bubble the carrier gas up into the melt from the bottom part of the respective reactor vessel(s). The carrier gas can be nitrogen gas, carbon dioxide, air, or a combination thereof. Introducing a purging gas stream in the headspace of the one or more reactor vessels may be done by applying a purging air stream. The resulting gas combinations as described above are then evacuated out of the respective reactor vessel via the top part thereof.

In some embodiments, those one or more reactor vessels are furthermore provided with a circulation loop which is arranged externally to the respective reactor vessel(s) and which is arranged to let the melt circulate through it, wherein the melt flows from the reactor vessel to the circulation loop via an inlet opening of the circulation loop and flows back to the reactor via an outlet opening of the circulation loop. This allows mixing of the melt present in the one or more reactor vessels and aids in the mass transfer. The circulation loop is optionally heated to avoid plugging of the loop which could happen when the melt crystallizes in the loop. The circulation of the melt furthermore promotes the separation of the gaseous by-products via flashing. In some embodiments, the outlet opening of the circulation loop, i.e. where the circulation loop is connected to the reactor vessel and where the melt flows out of the circulation loop into the respective reactor vessel, is arranged as a narrowed orifice to ensure pressure buildup and thereafter expansion of the flow of the melt, providing in amongst others a better separation of gaseous by-products and melt.

A second aspect of the present disclosure provides for solid particles, in particular flaky particles obtained or obtainable by a process according to the present disclosure.

In some embodiments, the solid particles, in particular solid flaky particles, may comprise between 5.0 wt.% and 60 wt.% of urea, between 2.0 wt.% and 60 wt.% of biuret, and between 5.0 wt.% and 30 wt.% of the N-containing compounds produced during a urea condensation process, and optionally between 0.1 wt.% and 50 wt.% of one or more nitrate compounds, with wt.% based on the total weight of the particle, the total weight of the particles forming 100 wt.%. In some embodiments, the particles, in particular flaky particles, comprise between 20 wt.% and 55 wt.% urea, between 20 wt.% and 50 wt.% urea, between 6.0 wt.% and 20 wt.% of the N-containing compounds, and, optionally, between 0.5 wt.% and 40 wt.%, such as e.g. between 0.5 wt.% and 5.0 wt.% or between 20 wt.% and 40 wt.% of one or more nitrate compounds, with wt.% based on the total weight of the particles, the total weight of the particles forming 100 wt.%.

In some embodiments, the particles, in particular flaky solid particles comprise between 30 wt.% and 60 wt.% of urea, between 30 wt.% and 60 wt.% of biuret, and between 5.0 wt.% and 30 wt.% of N-containing compounds produced during a urea condensation process, more in particular between 35 wt.% and 55 wt.% of urea, between 35 wt.% and 50 wt.% of biuret, and between 5.0 wt.% and 20 wt.% or between 6.0 wt.% and 16 wt.%, of the N-containing compounds produced during a urea condensation process, with wt.% based on the total weight of the particles, the total weight% of the particles being 100 wt.%. Optionally, the particles may further comprise between 0.5 wt.% and 5.0 wt.% of one or more nitrate compounds, preferably calcium nitrate, more in particular between 1.0 wt.% and 4.5 wt.% of one or more nitrate compounds, preferably calcium nitrate.

In other embodiments, the solid particles, in particular the flaky solid particles comprise between 20 wt.% and 40 wt.% of urea, between 20 wt.% and 40 wt.% of biuret, and between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, based on the total weight of the particles. The one or more nitrate compounds are more in particular water-soluble nitrate salts. In some embodiments, the water-soluble nitrate salt is selected from the group consisting of calcium nitrate, magnesium nitrate, ammonium nitrate, potassium nitrate, sodium nitrate, and mixtures thereof.

The solid particles comprising urea, biuret, and N-containing compounds produced during a condensation process of urea, optionally comprising one or more nitrate compounds, according to the present disclosure as described above, can typically be used as a feed supplement for ruminants as a Non-Protein Nitrogen (NPN) source in their feed. Accordingly, another aspect of the present disclosure provides for the use of the particles, particularly flaky particles, according to the present disclosure as a non-protein nitrogen source for ruminants.

Referring to Figure 1, in general, a particulation device (1) according to the present disclosure is arranged with a spraying head (2) which is arranged to receive a starting melt (7) comprising urea, biuret, and N-containing compounds produced during the urea condensation process, and optionally one or more nitrate compounds. The spraying head (2) is further arranged to spray droplets of the melt in a cooling liquid, as described elsewhere herein, which is contained in a particulation reservoir (3), or is arranged to generate molten droplets which fall downwards into the cooling liquid, as described elsewhere herein. When the molten droplets of the composition according to the present disclosure are sprayed or fall into the cooling liquid, solidified particles, in particular flaky solid particles, are formed. The particulation device may further comprise a first cooling device for maintaining the temperature of the cooling liquid. In some embodiments, the spraying head (2) is arranged above the cooling liquid at a distance sufficient to maintain the molten droplets in a liquid state until the moment they are introduced in the cooling liquid. For instance, the distance between the spraying head and the surface of the cooling liquid in the particulation reservoir (3) may be at least 5 cm, such as between 5 cm and 10 cm, between 5 cm and 20 cm, between 5 cm and 30 cm, between 5 cm and 40 cm, between 5 cm and 50 cm, or between 5 cm and 100 cm. The particulation device (1) further comprises a separator (4), more in particular a centrifuge, to separate the particles, particularly flaky particles, from the cooling liquid or, stated differently, to remove the liquid from the particles, in particular flaky solid particles. In an optional embodiment, a recycling line (5) provided with a second cooling device (6) is arranged to recuperate the removed liquid from the particles via recycle line (5) while cooling it again to the appropriate temperature using the second cooling device (6).

### Example

A saturated urea solution was prepared and poured into a 50 cm-high glass cylinder.

To this saturated urea solution cooled down to 7 °C (urea concentration = 44 wt.%), a melt comprising urea, biuret, and N-containing compounds produced during a condensation process of urea was added dropwise using a pipette. This melt had a temperature of 145°C. The melt composition, as measured by HPLC, was 49 wt.% urea, 42 wt.% biuret, 2.5 wt.%triuret, 2 wt.%% ammelide and 3 wt.% cyanuric acid.

The solid particles formed when the droplets moved down in the cooling liquid. The particles were separated by filtration. The particles could be described as flaky particles, wherein their diameter is much higher than their thickness and height. The diameter of the particles obtained was from 3.0 to 7.0 mm and their thickness was from 1.0 to 2.0 mm.

The composition of the particles was 32 wt.% urea, 49 wt.% biuret, 5 wt.% triuret, 2.5 wt.% cyanuric acid, 2.5 wt.% ammelide and 7% water. It can be observed that some urea comprised in the melt dissolved into the cooling solution.

## Claims

1. A process for producing solid particles comprising urea, biuret, and N-containing compounds produced during a urea condensation process, wherein the process comprises the steps of
a) providing a melt of a composition which comprises urea, biuret, and N-containing compounds produced during a urea condensation process, and, optionally, one or more nitrate compounds;
b) forming molten droplets of the melt;
c) introducing the molten droplets in a cooling liquid, thereby forming the solid particles, particularly wherein the cooling liquid is maintained at a temperature effective to solidify the melt; and
d) separating the cooling liquid from the solid particles.

2. The process according to claim 1, during step (c) the molten droplets flatten upon impact of the molten droplets on a surface of the cooling liquid, thereby forming flaky solid particles, particularly wherein the flaky solid particles have a diameter, or length and/or width between 1.0 and 10 mm, such as between 1.5 and 6 mm or between 2.0 mm and 4.0 mm; and a thickness between 0.5 to 2.0 mm, such as between 0.8 and 1.5 mm.

3. The process according to claim 1 or 2, wherein the cooling liquid is an aqueous urea solution, with a temperature of between -10 °C and 50 °C, in particular between -5 °C and 30°C, more in particular between -5 °C and 10 °C.

4. The process according to claim 3, wherein the aqueous urea solution is a concentrated or saturated aqueous urea solution having a concentration of at least 25 wt.% or at least 30 wt.% urea, more in particular having a concentration of about 40 wt.% of urea.

5. The process according to any one of claims 1 to 4, wherein step (b) comprises feeding the melt to a spraying head and spraying the melt through the spraying head to form the molten droplets of the melt.

6. The process according to any one of claims 1 to 5, wherein the melt provided in step a) has a temperature of between 140 °C and 170 °C.

7. The process according to any one of claims 1 to 6, wherein the melt provided in step a) comprises between 5 wt.% and 60 wt.% of urea and between 2 wt.% and 60 wt.% of biuret, more in particular between 25 wt.% and 55 wt.% of urea, between 25 wt.% and 50 wt.% of biuret, and between 5 wt.% and 30 wt.% of the N-containing compounds, based on the total weight of the melt.

8. The process according to any one of claims 1 to 7, wherein the melt provided in step a) comprises between 20 wt.% and 40 wt.% of urea, between 20 wt.% and 40 wt.% of biuret, and between 21 wt.% and 37 wt.% of one or more nitrate compounds, more in particular between 25 wt.% and 35 wt.% of urea, between 25 wt.% and 35 wt.% of biuret, and between 23.5 wt.% and 31.5 wt.% of one or more nitrate compounds, based on the total weight of the composition.

9. The process according to any one of claims 1 to 8, wherein the N-containing compounds produced during a urea condensation process and present in the melt provided in step a) comprise:
- between 3 wt.% and 6 wt.% of triuret, and/or
- between 0.5 wt.% and 3 wt.% of ammelide, and/or
- between 3 wt.% and 10 wt.% of cyanuric acid.

10. The process according to any one of claims 1 to 9, wherein step (d) is performed by centrifugation.

11. The process according to any one of claims 1 to 10, wherein, prior to step (a), a melt of the composition comprising urea, biuret, and N-containing compounds produced during a urea condensation process is produced by subjecting a urea melt in one or more reactor vessels, each having a headspace at a top part thereof and a bottom part, to a heating process, such that the temperature of the urea melt reaches between 140 °C and 180 °C, wherein during the heating process the urea melt is converted to the melt of the composition comprising urea, biuret, and N-containing compounds, which is removed from the one or more reactor vessels via the bottom part thereof.

12. The process according to claim 11, wherein, during the heating process, the melt in the one or more reactor vessels is further subjected to a circulation process in and out of the one or more reactor vessels via a circulation loop arranged externally from each of the reactor vessels; and wherein during formation of the melt comprising urea, biuret, and N-containing compounds, gaseous by-products are produced which are evacuated out of the respective reactor vessel via the top part thereof.

13. Solid particles, obtained by a process according to any one of claims 1 to 12, comprising:
- between 35 wt.% and 55 wt.% of urea, between 35 wt.% and 50 wt.% of biuret, and between 5 wt.% and 30 wt.% of the N-containing compounds; or
- between 20 wt.% and 40 wt.% of urea, between 20 wt.% and 40 wt.% of biuret, and between 21 wt.% and 37 wt.% of one or more nitrate compounds,
with wt.% based on the total weight of the particle.

14. The particles according to claim 13, having a diameter, or length and/or width between 1.0 and 10 mm, such as between 1.5 and 6 mm or between 2.0 mm and 4.0 mm; and having a thickness between 0.5 to 2.0 mm, such as between 0.8 and 1.5 mm.

15. Use of solid particles, particularly flaky solid particles, obtained by a process according to any one of claims 1 to 12, as a non-protein nitrogen source for ruminants.
